(19) **Europäisches Patentamt / European Patent Office / Office européen des brevets**

(11) **EP 4 137 975 B1**

(12) **EUROPEAN PATENT SPECIFICATION**

(45) Date of publication and mention
of the grant of the patent:
**11.02.2026 Bulletin 2026/07**

(21) Application number: **21306134.4**

(22) Date of filing: **20.08.2021**

(51) International Patent Classification (IPC):
**G06F 21/54** (2013.01)   **G06F 21/57** (2013.01)

(52) Cooperative Patent Classification (CPC):
**G06F 21/54; G06F 21/577;** G06F 2221/033

(54) **METHOD AND SYSTEM FOR VERIFICATION OF REDUNDANT-CHECK COUNTERMEASURES**

VERFAHREN UND SYSTEM ZUR VERIFIZIERUNG VON GEGENMASSNAHMEN BEI
REDUNDANTEN PRÜFUNGEN

PROCÉDÉ ET SYSTÈME DE VÉRIFICATION DE CONTREMESURES D'ARRÊT REDONDANTES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.02.2023 Bulletin 2023/08**

(73) Proprietors:
• **Commissariat à l'Energie Atomique et aux
Energies
Alternatives
75015 Paris (FR)**
• **THALES
92190 Meudon (FR)**

(72) Inventors:
• **KOSMATOV, Nikolay
78210 Saint Cyr L'Ecole (FR)**
• **PREVOSTO, Virgile
91191 Gif sur Yvette (FR)**
• **MARTIN, Thibault
91191 Gif sur Yvette (FR)**

(74) Representative: **Atout PI Laplace
Immeuble Up On
25 Boulevard Romain Rolland
CS 40072
75685 Paris Cedex 14 (FR)**

(56) References cited:
• **LIONEL M RIVIERE: "S�curisation des
impl�mentations logicielles face aux attaques
par injection de faute sur syst�mes
embarqu�s", 23 September 2015 (2015-09-23),
Paris, XP055553945, Retrieved from the Internet
<URL:http://lionel.riviere.name/thesis/
LionelRivierePhD.pdf> [retrieved on 20190208]**
• **AZZI SABINE ET AL: "Using linear codes as a
fault countermeasure for nonlinear operations:
application to AES and formal verification",
JOURNAL OF CRYPTOGRAPHIC ENGINEERING,
SPRINGER BERLIN HEIDELBERG, BERLIN/
HEIDELBERG, vol. 7, no. 1, 28 October 2016
(2016-10-28), pages 75 - 85, XP036199344, ISSN:
2190-8508, [retrieved on 20161028], DOI: 10.1007/
S13389-016-0138-1**
• **BREIER JAKUB ET AL: "On Evaluating Fault
Resilient Encoding Schemes in Software", IEEE
TRANSACTIONS ON DEPENDABLE AND
SECURE COMPUTING, IEEE SERVICE CENTER,
NEW YORK, NY, US, vol. 18, no. 3, 5 February
2019 (2019-02-05), pages 1065 - 1079,
XP011854470, ISSN: 1545-5971, [retrieved on
20210513], DOI: 10.1109/TDSC.2019.2897663**

**Description**

Physical attacks of embedded systems (via light pulses, laser shots, clock, voltage or electromagnetic glitches, etc.) consist in introducing a fault that alters correct execution of software as discussed for example in the article by A. Barenghi, L. Breveglieri, I. Koren, and D. Naccache, entitled "Fault Injection Attacks on Cryptographic Devices: Theory, Practice, and Countermeasures," published in Proc. IEEE, vol. 100, no. 11, pp. 3056-3076, 2012, doi: 10.1109/JPROC.2012.2188769, or the article by S. Bhasin, P. Maistri, and F. Regazzoni, entitled "Malicious wave: Asurvey on actively tampering using electromagnetic glitch," published in 2014 International Symposium on Electromagnetic Compatibility, Tokyo, 2014, pp. 318-321. Such fault injections can target many different objectives as reviewed for example in the article by B. Yuce, P. Schaumont, and M. Witteman entitled "Fault Attacks on Secure Embedded Software: Threats, Design, and Evaluation," J. Hardw. Syst. Secur., vol. 2, no. 2, pp. 111-130, May 2018, doi: 10.1007/s41635-018-0038-1.

The article entitled "On Evaluating Fault Resilient Encoding Schemes in Software" by Jakub Breier et al published on 5 February 2019 in IEEE transactions on Dependable and Secure Computing, IEEE service center, New York, discusses a dynamic code analyzer that is able to simulate the code execution and fault injection with a bit precision in any instruction of the code. Flip bit attack resistance is assessed on the basis of Definition 14 (m-bit fault resistance probability). Let m be an integer such that $1 \leq m \leq n$, the m-bit fault resistance probability of C w.r.t. (K, P, M, E, D) and F1, denoted by pC,m, is defined as

$$P_{C,m} := \sum_{\varsigma \in \mathcal{G}_{(\mathcal{F}_1, fm, m)}} \Pr[\varsigma \ is \ safe] \Pr[\varsigma \ is \ injected] = \frac{1}{\left|\mathcal{G}_{(\mathcal{F}_1, fm, m)}\right|} \sum_{\varsigma \in \mathcal{G}_{(\mathcal{F}_1, fm, m)}} \Pr[\varsigma \ is \ safe]$$

Considering that the attacker can inject a fault that has the highest probability to be missed by the encoding scheme so that the minimum of the m-bit fault resistance probabilities is selected. To check the overall resistance of a code in fault resilient encoding scheme, all the possible bit flips are considered, and the bit flip resistance probability is defined as:

$$P_{C,bf} := \min_{1 \leq m \leq n} P_{C,m}$$

where Pm,C is the the m-bit fault resistance probability of C w.r.t. to (K, P, M, E, D) and $F_1$.

The bit flip fault resistance probability is used as a metric for evaluating a code used in fault resilient encoding scheme w.r.t. bit flip fault attacks.

The article "Using linear codes as a fault countermeasure for nonlinear operations: application to AES and formal verification" by Abine Azzi et al published 28 October 2016 in the Journal of Cryptographic Engineering, Springer Berlin Heidelberg, studies how linear systematic error correcting codes cans simply be used to detect fault injections during nonlinear operations in a symmetric block cipher. In the described methodology, in order to verify that a codeword has not been corrupted, it is verified that the message x corresponds to its redundancy value $A_x$. In order to verify it, a new predicate "safe_state" is defined. The desired property then consists in verifying that if a state was safe (i.e. last property is verified) before the execution of the current operation, then the state remains safe after its execution too. In order to guarantee that only one fault is injected at every execution, the counter "fault_injected" is defined and is incremented every time a fault injection occurs.

The doctoral theses of Lionel Rivière published on the 23 September 2015 entitled "Sécurisation des implémentations logicielles face aux attaques par injection de faute sur systèmes embarqués » Presents an embedded fault simulator tool which can target syntactic language level structures such as the if or switch statements or loop structures such as for or while loops as well as how functions are called. Once compiled, those high level statements will be translated to low-level assembly instructions. To a single high-level statement can correspond several assembly instructions, which can be disposed in a contiguous way or not.

A frequent goal of such attacks is to bypass some critical checks in the code (such as user authentication, software integrity or software authentication checks) in order to get to a protected point that gives access to sensitive information or physical resources. To prevent physical attacks of embedded systems fromaltering the correct execution of the software as discussed above, designers of embedded software use in particular redundancy based countermeasure schemes as known for example from the article by Barenghi, Alessandro, Brevegli, Luca, Koren, Israel, Pelosi, Gerardo, and Regazzoni, Francesco, entitled "Countermeasures against fault attacks on software implemented AES: effectiveness and cost," presented at the Workshop on Embedded Systems Security (WESS), Oct. 2010. In some of these schemes, critical checks (i.e. conditional statements or tests) in the code are duplicated. In this way, if attackers manage to bypass one check by injecting a fault and flipping the result of the check, the redundant check still prevents reaching the protected point. This countermeasure assumes that it is unlikely to inject two faults in a coordinated way by physical attacks during the same execution. It can be generalized to any number k ≥ 1 of coordinated faults: if an attacker is assumed to be able to introduce k coordinated faults, each critical check should be repeated k + 1 times.

A simple C code with a redundant-check countermeasure is illustrated below:

Table 1.

```
if ( password != secret ) return 1; // Error , bad password
if ( password != secret ) return 1; // Error , bad password
//Protected : Successfully authenticated
```

Assuming "password" is a user-submitted password and "secret" is the correct password, the duplicated conditional ensures that the password check will be performed even if one of the conditions is inverted by an attack. A more interesting example, with code integrity checks is presented below:

Table 2.

```
01 typedef enum {
02         secfalse = 0x55aa55aa ,
03         sectrue = 0xaa55aa55
04 } secbool ; // secure true / false values
05
06 secbool check_code_integrity() ; // checks code integrity
07
08 int main () {
09         secbool chk = check_code_integrity() ;
10         if ( chk != sectrue ) return 1; // Error , compromised
code
11             if (! chk == sectrue ) return 1; // incorrect
countermeasure
12         // Protected : Successful code integrity check
13 }
14
```

Such a check is performed by function check_code_integrity, supposed to be in turn protected by countermeasures against test inversions. As a protection from bit flipping, this function returns a value of the secbool type, whose values sectrue and secfalse have a maximal bit-distance. The second condition is written in a different way, and is erroneous here: the developer should have used a bit negation ~chck instead of a logical negation! chck. If chck is secfalse, its logical negation is in fact 0, and the test on line 11 leads to a protected point. This example illustrates an incorrect countermeasure, due to a misuse of secbool values. Various approaches are used to assess the efficiency of countermeasures on a given system. Fault injection based techniques -reproducing potential physical attacks on the target device- allow validation engineers to detect (confirmed) vulnerabilities or get confidence that the system is sufficiently resistant to attacks. Such techniques have the advantage of considering the real-life target system, but remain costly and time-consuming, and cannot guarantee that the system will resist similar attacks in a slightly different setting (e.g. different signal force, frequency, duration or number of attempts). Another approach consists in searching potential attacks at the software level, by simulating a chosen set of possible faults in the code and trying to identify potential attacks using test generation as presented by M. Potet, L. Mounier, M. Puys, and L. Dureuil in the article entitled "Lazart: A Symbolic Approach for Evaluation the Robustness of Secured Codes against Control Flow Injections," in IEEE International Conference on Software Testing, Verification and Validation (ICST), 2014, pp. 213-222, doi: 10.1109/ICST.2014.34 or to prove their absence using formal verification as presented by M. Christofi, B. Chetali, L. Goubin, and D. Vigilant in the article entitled "Formal verification of a CRT-RSA implementation against fault attacks," J. Cryptogr. Eng., vol. 3, no. 3, pp. 157-167, Sep. 2013, doi: 10.1007/s13389-013-0049-3 or by K. Heydemann, J.-F. Lalande, and P. Berthomé, in the article entitled "Formally verified software countermeasures for control-flow integrity of smart card C code," Comput. Secur., vol. 85, pp. 202-224, Aug. 2019, doi: 10.1016/j.cose.2019.05.004. Even if their results are subject to assumptions (about the considered fault model, fault simulation approach, compiler, etc.), software-level approaches provide a useful complement to physical evaluation: they are cheaper, can be fully automatic and can rigorously consider all potential faults with respect to the chosen fault simulation. Such techniques help to find hybrid software/hardware attacks as discussed by ANSSI et al. in the article entitled "Inter- CESTI: Methodological and Technical Feedbacks on Hardware Devices Evaluations," presented at the Symposium sur la sécurité des technologies de l'information et des communications (SSTIC), 2020, [Online]. Available: https://www.sstic.org/2020/presentation/inter-cesti_methodological_and_technical_feedbacks_on_hardware_devices_evaluations/.

Due to their redundant behavior, a correct implementation of countermeasures is difficult to verify, yet crucial to ensure resistance to the considered faults. It is desirable to provide a mechanism whereby for the considered fault model it may be ensured that the countermeasures in the target software are correctly implemented. More precisely, it is desirable to define automated mechanisms able to formally verify that by inverting up to k checks in code, an attacker will not be able to reach a protected code point.

SUMMARY OF THE INVENTION

The present invention is defined in the independent claims.

In accordance with the present invention in a first aspect there is provided a computer implemented method of determining the resistance of software code to physical attacks as defined in the appended independent claim 1, a data processing system as defined in the appended independent claim 6, a computer program as defined in the appended independent claim 7, and a computer- readable medium as defined in the appended independent claim 8. Preferred embodiments are defined in the dependent claims.

BRIEF DESCRIPTION OF THE DRAWINGS

The invention will be better understood and its various features and advantages will emerge from the following description of a number of exemplary embodiments provided for illustration purposes only and its appended figures in which:

Figure 1 shows a computer implemented method of determining the resistance of software code to physical attacks based on the inversion of a test condition in accordance with an embodiment;

Figure 2 presents a flowchart of a method in accordance with an embodiment; and

Figure 3 presents a user device in accordance with certain embodiments.

DETAILED DESCRIPTION OF THE INVENTION

It is desired to provide enhanced protection against physical attacks of processors including embedded systems (via light pulses, laser shots, clock, voltage or electromagnetic glitches, etc.), by ensuring that effective countermeasures are incorporated in code directing the operations of such processors.

The prior art as discussed above proposes a technique to generate potential attacks for test inversion fault attack using test generation. It does not allow formal verification that the countermeasures are correctly implemented.

To this end, there is provided a computer implemented method of determining the resistance of software code to physical attacks based on the inversion of a test condition, where the software code has a rated resistance (k) in terms of a maximum number of supported attacks and comprising a critical section to which said rated resistance is specified to prevent improper access. The method comprises the steps of identifying each binary test in the code where satisfaction of a respective test condition is required to reach said critical section in sequential execution of said code(C1...CN), and modifying the software code to replace each binary test with a respective attack simulation test implementing an exclusive OR operation on the basis of said respective test condition and a respective binary attack indicator variable defined by a respective non interpreted function such that the total number of attacks for a given possible combination of test condition values is less than or equal to said rated resistance (k). Deductive verification is then applied to an assertion stating that said critical section of the modified code is not reached for every possible combination of test condition values for said identified binary tests and for every possible combination of binary attack indicator values indicating the occurrence of at least one attack across each respective combination of test condition values, whereby the code is considered to be effectively secure to its rated resistance in a case where said assertion is proved.

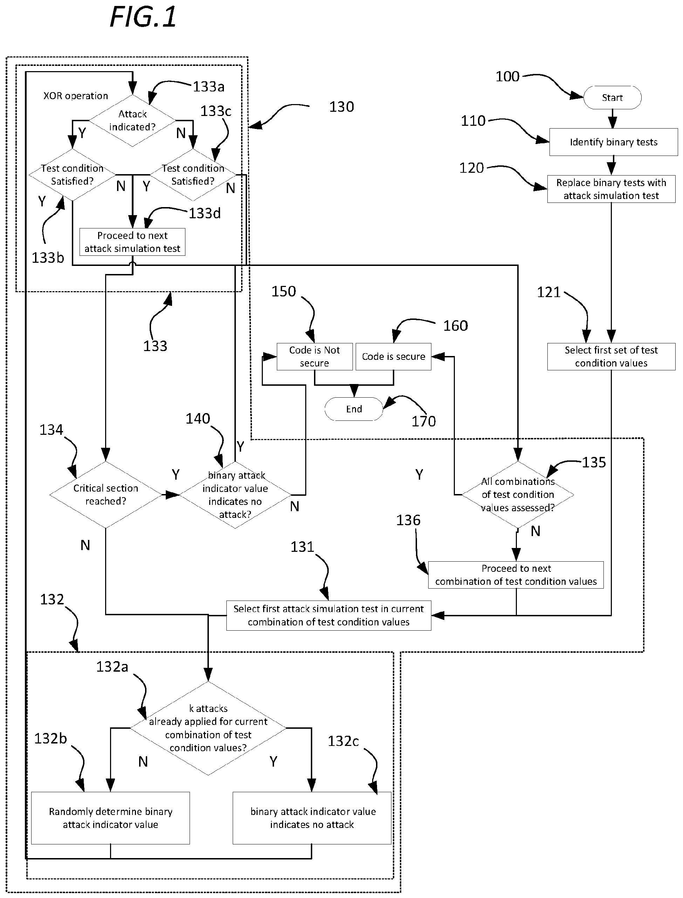

Figure 1 shows a computer implemented method of determining the resistance of software code to physical attacks based on the inversion of a test condition in accordance with an embodiment. More specifically, embodiments provide a source-code-level formal verification technique of correct implementation of redundant-check based countermeasures.

The embodiments concern software code having a rated resistance (k) in terms of a maximum number of supported attacks, and comprising a critical section to which the rated resistance is specified to prevent improper access.

As shown, the method starts at step 100 before proceeding to step 110 at which each binary test where satisfaction of a respective test condition is required to reach the critical section in sequential execution of the code(C1...CN) is identified. A binary test may be applied to either a value that would be assessed as a pass, or a value that would be assessed as a failure. The sequence of passing values and failing values dictates the sequence of processing of the code.

For example, we may consider a sample of code as shown below.

## Table 3

```
1 if (C1 )
{ code1 ;}
3 ...
4 if (CN )
5 { codeN ;}
6 // Protected
```

As shown, this code incorporates redundant tests at lines 1 and 4 for which it is desired to assess that the countermeasures are adequate, i.e. that the critical section, indicated by the comment "protected" in line 6 cannot be executed by an attacker that can only perform up to (N-1) test inversions.

The method then proceeds to step 120 at which the software code is modified to replace each binary test identified at step 110 with a respective attack simulation test implementing an exclusive OR operation on the basis of the respective test condition and a respective binary attack indicator variable. It will be appreciated that although steps 110 and 120 are shown sequentially, individual binary tests, or groups of binary tests may equally be identified and modified batch wise. It will be appreciated that while the implementation calls for an Exclusive OR operation, such an operation need not be natively supported by the programming language in use. This is immaterial to the underlying logic to be implemented as set out in table 4 below:

Table 4

| | Ordinary test value (C1)=True | Ordinary test value C1=False |
|---|---|---|
| Binary attack (mut_1)= True | ((! mut_1 && C1) \|\| ( mut_1 && !C1)) = FALSE (test result flipped from pass to fail) | ((! mut_1 && C1) \|\| ( mut_1 && !C1)) =TRUE (test result flipped from fail |
| Binary attack (mut_1) =False | ((! mut_1 && C1) \|\| ( mut_1 && !C1))= TRUE (testresult not flipped- pass result retained) | ((! mut_1 && C1) \|\| ( mut_1 && !C1))= FALSE (testresult not flipped- Fail result retained) |

Table 5 below presents the exemplary code of Table 3 modified on this basis by way of example.

## Table 5.

```
int mut_1 = mutated () ;
if ((! mut_1 && C1 ) || ( mut_1 && !C1 )
{ code1 ;}
...
int mut_N = mutated () ;
if ((! mut_N && CN ) || ( mut_N && !CN )
{ codeN ;}
/*@ check ! mut_0 && ... && ! mut_N ; */
// Protected
```

As such, there is provided a non-interpreted function specifying the mutation generation (generating the binary attack indicator value). More specifically, as shown in Table 5 (e.g. line 1), for each test of a condition Ci, a call to "mutated" is added and its result (the binary attack indicator value) is stored in a variable mut_i, that may be referred to as a mutation trigger. Then the value of Ci is combined with the binary attack indicator value in order to trigger a test inversion, i.e. to take the opposite branch, if mutated returned true (e.g. line 2).

Line 8 of table 5 comprises a logic formula interpretable by a formal specification language interpreter such as ACSL annotations and the Frama-C tool for the C language, or JML annotations and the openJML deductive verification tool for Java, and so forth, that must hold each time the program reaches this point in the code. In this case, the annotation expresses formally the fact that the only way for the execution to reach this point is that no attack has been performed (and all the (genuine) conditions have evaluated successfully).

In deductive verification, the code is never executed, instead, a logic model of its actions is built, and automated provers are applied to demonstrate that the model satisfies the properties of interest. In this context, function calls are modeled by what is known as function contracts, where we indicate:

- The part of the memory that the function might modify
- The properties that the function expects to hold when it is called (called preconditions, it is thus the responsibility of the caller to enforce them)
- The properties that the function guarantees to hold when it returns.

We do not need the actual definition of "mutated" to prove things on its callers: we just assume that the definition obeys the contract.

As such a dedicated code instrumentation simulating possible faults in critical checks ("test inversion") by mutations is provided.

Then the method selects a first combination of test condition values at step 121 as the current combination of test condition values for the first iteration of the test procedure. The way the combination is selected is not important, any way to select the first combination can be used as may readily occur to the skilled person.

The method then proceeds to step 130, whereby for each possible combination of test condition values for the identified binary tests, each respective attack simulation test is considered in turn. The following description presents these steps as explicitly performed operations for the purposes of facilitating understanding of the aims of the invention, however it will be appreciated that embodiments based on deductive verification will not typically explicitly perform these operations, but rather as a mathematical proof of a set of verification conditions of equivalent meaning. A "combination of test condition values" is the set comprising each value applicable at each identified test in the code, bearing in mind that in operation, each test may be applied to either a value that would be assessed as a pass, or a value that would be assessed as a failure. The sequence of passing values and failing values dictates the sequence of processing of the code. As such, since various possible paths through the code, or processing sequences, are possible each will have a corresponding combination of test condition values.

As shown, step 130 comprises a first sub-step of 131 of selecting a first attack simulation test in the current combination of test condition values, and then proceeding to step 132, where a respective binary attack indicator value is determined using a non-interpreted function to indicate either the occurrence of an attack in the respective attack simulation test, or the absence of an attack in the respective attack simulation test where the total number of attacks for a given possible combination of test condition values is less than or equal to the rated resistance (k).

As shown, this may be implemented by a sub-step 132a of determining whether k attacks have already been applied for the current combination of test values, and in a case where k attacks have not already been applied for the current combination of test values, randomly determining a binary attack indicator value at step 132b, and in a case where k attacks have already been applied for the current combination of test values, setting a binary attack indicator value to indicate no attack at step 132c. The method then proceeds from step 132c or 132b to step 133.

As shown, from sub-step 132 the method proceeds to sub-step 133, of proceeding to the next attack simulation test in a case where the respective attack simulation test condition is satisfied, until either the critical section is reached, or a respective attack simulation test is not satisfied.

As shown, this may be implemented by a sub-step 133a of determining whether the binary attack indicator set at step 132 indicates an attack, and in a case where an attack is indicated, determining at step 133b whether the test is satisfied, using a reversed input value to reflect the effect of the attack, and in a case where an attack is not indicated, determining at step 133c whether the test is satisfied, using an un- modified input value. If at step 133b the test condition is satisfied (it should have been failed with the current test condition values, but the result was reversed by the attack), or at step 133c the test condition is not satisfied (indicating that the current test conditions indicate a failure, which in the absence of an attack remains the case), the method proceeds to step 135. Otherwise, If at step 133c the test condition is satisfied (indicating that the current test conditions indicate a pass, which in the absence of an attack remains the case), or at step 133b the test condition is not satisfied (it should have been passed with the current test condition values, but the result was reversed by the attack), the method proceeds to step 133d, at which it is determined to proceed to the next attack simulation as identified at step 110.

As such, sub-steps 133a, 133b and 133c implement on optional implementation of the exclusive or operation specified for step 130.

The method then proceeds from sub-step 133d to sub-step 134, at which it is determined whether the critical section of the code has been reached. In a case where it has, the method proceeds to step 140, at which it is considered whether the binary attack indicator value indicates no attack. In a case where the binary attack ndicator value indicates no attack, this represents a case where legitimate access to the critical section is achieved, and analysis may proceed by looping back to step 135. In a case where the binary attack indicator value indicates at least one attack, the fact that the critical section has been reached under attach conditions indicates that the code cannot be considered secure, and the method proceeds to step 150, at which the code is considered not to be secure before terminating at step 170.

Generally, if we reach the critical section with at least 1 attack having occurred (step 132 being there to guarantee that we don't have more than k), we may conclude that the code Is not secure. It is only if we test all possible combinations of attacks without reaching the critical section that we can deem the code secure. Referring back to the example of Table 5, it may be noted that a check annotation is incorporated at the beginning of the critical code segment at line 9, which states that all mutation triggers are false at the protected point. If this annotation is proved, we can conclude that the protected code section can never be reached through fault injections (with the considered fault model), in other words, that redundant-check countermeasures are correctly implemented. Indeed, if each critical check is repeated at least k + 1 times, k test inversions cannot suffice to reach the protected section since the unmutated test(s) will still prevent that. This Check annotation constitutes a deductive verification goal on the resulting code, such that if this Check annotation is formally proved by deductive verification in accordance with certain embodiments for example as described herein, we can conclude that the countermeasures effectively prevent attacks."

As described above, steps 131 to 140 will not generally be implemented explicitly, but rather, the modified code obtained from step 120 assessed by deductive verification of an assertion stating that said critical section is not reached for every possible combination of test condition values for said identified binary tests and for every possible combination of binary attack indicator values indicating the occurrence of at least one attack across each respective combination of test condition values, whereby the code is considered to be effectively secure to its rated resistance in a case where said assertion is proved.

On the contrary, if there is an attack path with a nonzero number of faults, i.e. on which some mutation triggers are true, this annotation cannot be proved in general. The steps presented in figure 1 explain the general approach to assessing the security of a section of code, however it will be appreciated that exhaustively testing all possible attack scenarios on real code quickly becomes unmanageable. Accordingly, as set out herein, rather that attempting to explicitly generate a test case for every possible scenario, a formal deductive verification is performed by replacing key operations with logical formula that can be efficiently handled by automated theorem provers.

Implementations may be based for example on deductive verification tools like the WP plugin of Frama-C.

If it is determined at sub-step 134 that a critical section has not been reached yet, the method reverts to step 132 for the consideration of the next attack simulation test. At sub-step 135, it is determined whether all combinations of test condition values have been considered. If it is determined that all combinations of test condition values have been considered, i.e. that every possible path through the code has been considered without reaching the critical section, the method proceeds to sub- step 160 at which it is concluded that the code can be considered to be secure, before terminating at step 170. If it is determined that all combinations of test condition values have not been considered, i.e. that certain possible path through the code has not yet been considered, the method proceeds to sub-step 136. At sub-step 136 the next combination of text combination values is selected, before reverting to step 131.

It will be appreciated that many different configurations of the sub-steps of step 130, and/or the sub-steps of sub-steps 132 or 133 are possible which would equally achieve the required operations of step 130.

Advantageously, user input may indicate the beginning and the end of the critical part of the code, inside which all tests should resist to fault injection attacks. This may be done to focus only on the critical steps (containing authentication, integrity checks, version control, etc.) since other parts of the code (e.g. following the authentication) typically do not integrate countermeasures. The end of the indicated code segment corresponds to the protected point that gives access e.g. to sensitive resources or information. In this code segment, all checks are instrumented to simulate faults introduced by an attacker according to the considered fault model: an attacker can invert up to k tests.

Embodiments allow the user to formally verify that the countermeasures are correctly implemented, that is, to formally prove that by inverting up to k checks in the code, the attacker will not be able to reach the protected code point.

Potential applications include any security sensitive system whose software includes countermeasures against the considered fault model and that needs to demonstrate the effectiveness of these countermeasures (e.g. as part of a certification at EAL 5-7 of the Common Criteria for Information Technology Security Evaluation).

The operations of sub-step 132 as discussed above for example may conveniently be implemented by a specific function. This function may be defined by means of an ACSL specification, for example as shown in the following code.

Table 6

```
1 #define MAX_MUTATION 1 // Max number of modeled faults
02 unsigned int cpt_mut = 0;
03 /*@
04 assigns cpt_mut ;
05 behavior cannot_mutate :
06    assumes cpt_mut ≥   MAX_MUTATION
;
07         ensures ! \result ;
08         ensures cpt_mut == \at ( cpt_mut , Pre ) ;
09 behavior can_mutate :
10      assumes cpt_mut < MAX_MUTATION ;
11    ensures \result ⇔  cpt_mut == \at ( cpt_mut , Pre ) + 1;
12         ensures ! \result ⇔  cpt_mut == \at ( cpt_mut , Pre ) ;
13 */
14 int mutated () ;
```

The implementation of this function is not required for the approach based on deductive verification.

As explained above, in deductive verification, a logic model of the code's actions is built, and automated provers are applied to demonstrate that this model satisfies the properties of interest. In this context, function calls are modeled by what is known as function contracts, corresponding in this example to line 4 to 12 in table 6 above.

In accordance with step 130, and in particular sub-step 132 as presented in figure 1, at most k faults (for any given value of k greater than or equal to 1, by setting the MAX_MUTATION macro definition to k (in the preceding example, k = 1). The specification on lines 3-13 guarantees that mutated (the binary attack indicator value) will return true (i.e. nonzero) at most MAX_MUTATION times during an execution (e.g. for a particular combination of test condition values).

The variable cpt_mut is defined to count how many times the function has returned true so far, i.e. how many attacks have already been applied for the current combination of test values, as assessed for example at step 132a.

Line 4 specifies that the function mutated modifies only cpt_mut, so that it does not interfere with the application code. Then two behaviors (i.e. cases) are considered (cf. lines 5 and 9). If the maximal number of mutations is achieved (line 6), then the function returns false (corresponding to step 132c for example), i.e. does not trigger a mutation, and the counter is unchanged (lines 7-8). If the maximal number of mutations is not reached (line 10), then the function either returns true and increments the counter (i.e. triggers a mutation), or returns false and leaves the counter unchanged (lines 11-12) (corresponding to step 132b for example).

In the presence of function calls and loops, deductive verification tools of the prior art usually rely on user-provided specifications to reason about these constructions.

On this basis, in certain embodiments the process may comprise a further step, for example prior to the step of identifying each binary test, of identifying any functions called by the code, and additionally performing the steps of claim 1 with respect to the code of each called function.

In accordance with certain embodiments, the requirement to provide such a specification goes against the general objective to make the verification process as automated as possible. For instance, to deal with the example of Table 2, the user would need to provide a complete specification of function check_code_integrity. To avoid this scenario, called functions may be in-lined, that is to say, performing a further step, for example prior to the step of Identifying each binary test, of identifying any functions called by the code, and explicitly incorporating the code of that function explicitly in the to be verified code each time the function is called. This approach may be adopted for all function calls, or selected function calls, with remaining function calls being performed by separately performing the steps of claim 1 with respect to the code of each called function as discussed above. It may be noted that this may still be desirable if the function does not include any tests, since, for example, if the function computes a value v that is afterwards used in a condition, we need to inline this computation; otherwise our logical model will probably not have enough information about v.

Similarly, where the code includes loop structures, these may be unrolled; that is to say, a further step may be performed for example prior to the step of identifying each binary test, of identifying iterative loop structures in the code, and explicitly incorporating the code of the loop in the code for a predefined number of iterations thereof. Where the number of times to loop is to be repeated in normal operation is explicit in the code, or predictable on the basis of known values or experimental execution, the number of explicit inclusions may be fixed on this basis. This approach may not be optimal for example, if the maximal number of loop iterations is very large or cannot be bounded. In practice, in critical code segments, loops with unbounded number of iterations are not so common, and it is often possible to determine the maximal number of loop iterations (a password is read at most three times, the code to check or the payload to copy is of a fixed finite length, etc.). In the case study presented below, this solution allowed indeed to avoid additional specifications.

Otherwise, a fixed number of inclusions may be used. For example, the number of inclusions may be fixed at k, the number of levels of attack that the code is intended to protect against. It may be noted that this may still be desirable if the loop does not include any tests, since, for example, if the loop computes a value v that is afterwards used in a condition, we need to inline this computation; otherwise our logical model will probably not have enough information about v.

These approaches of in-lining functions, and unrolling the loops bring the benefit that the process can reason about the code without additional annotations.

While the approach described above revolves about the resolution of binary tests, it will be noted that software often contains non-binary tests, or compound tests, where a single test includes a logical combination of values. Table 7 below shows an example of such a compound test.

## Table 7.

```
1 if (chk != sectrue && !( chk!= sectrue)) return 1; // Error ,
compromised code
2 // Protected code
```

It will be appreciated that such compound tests may be logically replaced with a series of separate binary tests, which are then susceptible of processing in accordance with the process presented above.

In view of this situation, in accordance with certain embodiments, there may be performed a further steps, prior to the step of modifying the software code, of identifying any compound test, and of replacing each compound test with a series of binary tests implementing the function of the compound test.

Certain embodiments may conveniently make use of "LTest" as presented by S. Bardin, O. Chebaro, M. Delahaye, and N. Kosmatov, in the article "An All-in-One Toolkit for Automated White-Box Testing," in TAP, York, UK, 2014, pp. 53-60, doi: 10.1007/978-3-319-09099-3_4, a set of tools for coverage oriented testing, mostly written in OCaml as plugins of Frama-C as presented by F. Kirchner, N. Kosmatov, V. Prevosto, J. Signoles, and B. Yakobowski in the article entitled "Frama-C: A software analysis perspective," Form. Asp Comput, vol. 27, no. 3, pp. 573-609, 2015, doi: 10.1007/s00165-014-0326-7, a program analysis platform for C code. One of the tools, LAnnotate, creates test objectives for given criteria. Embodiments may be implemented as a new criterion in this context, which instruments countermeasures using provided annotations from a user. The instrumented code can then be given to the LUncov tool which will try to prove, using Wp, that the target point cannot be reached with N mutations in conditions.

An implementation has been tested on the bootloader module of a secure USB storage device platform called WooKey (https://wookey-project.github.io/) which contains countermeasures to prevent fault injection. While most countermeasures were found to be effective, but the implementation successfully isolated certain ineffective measure, for example as shown in Table 8 below:

## Table 8

```
1 /* double if protection */
2 if ( new_state == 0xff && !( new_state != 0xff ) ) {
3 dbg_log ( " %s : PANIC ! this should never arise ! " ,

4  dbg_flush () ;
5 loader_set_state ( LOADER_ERROR );
6 return ;
7 }
8 // Protected code
```

Specifically, it may be observed that Line 2 of the preceding code shows a check that sets the loader state to LOADER_ERROR and exits if the value of new_state is erroneous (0xff). In this case, the countermeasure realized by the compound condition on line 2 does the opposite of its purpose. Instead of protecting the critical code section, it increases the probability of an attack since a single mutation in either the original condition or in its duplicated version will lead to bypassing the countermeasure and reaching the protected point. This error comes from the use of the logical operator AND (&&) instead of OR (||). It may be noted that line 2 comprises a compound test, which in the present case was expanded to obtain separate binary tests as described above.

EP 4 137 975 B1

For the example of Table 8, the resulting code in a C implementation such as Frama-C as discussed above can be the following:

```
1  int mut_1 = 0, mut_2 = 0;
2  mut_1 = mutated ();
3  if ((! mut_1 && (chk != sectrue) ) ||
4        ( mut_1 && ! (chk != sectrue) ) ) {
5          mut_2 = mutated ();
6          if ((! mut_2 && (!( chk!= sectrue)) ) ||
7      ( mut_2 && ! (!( chk!= sectrue)) ) {
8            return 1;
9            }
10 }
11 //@ check ! mut_1 && ! mut_2;
12 // Protected code
```

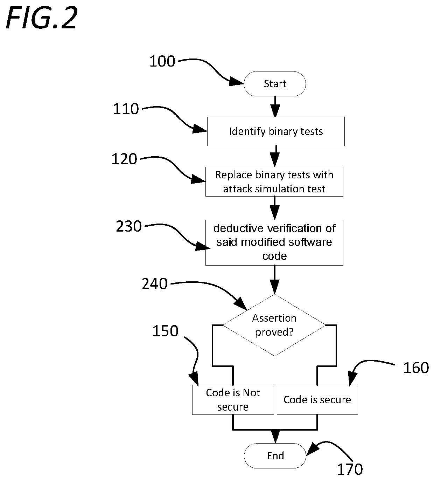

Figure 2 presents a flowchart of a method in accordance with an embodiment.

Figure 2 presents a computer implemented method of determining the resistance of software code to physical attacks based on the inversion of a test condition, where the software code has a rated resistance (k) in terms of a maximum number of supported attacks and comprising a critical section to which said rated resistance is specified to prevent improper access.

In particular, figure 2 presents a method in which steps 121 to 140 of figure 1 are implemented by a logically equivalent deductive verification. As shown, the method starts at step 100 before proceeding to step 110 substantially as described above, of identifying each binary test in the code where satisfaction of a respective test condition is required to reach said critical section in sequential execution of said code(C1...CN), and at step 120 modifying the software code to replace each binary test with a respective attack simulation test implementing an exclusive OR operation on the basis of said respective test condition and a respective binary attack indicator variable defined by a respective non interpreted function such that the total number of attacks for a given possible combination of test condition values is less than or equal to said rated resistance (k).

As shown in figure 2, a deductive verification is then applied to an assertion stating that said critical section of the modified code is not reached for every possible combination of test condition values for said identified binary tests and for every possible combination of binary attack indicator values indicating the occurrence of at least one attack across each respective combination of test condition values at step 230 whereby the code is considered to be effectively secure to its rated resistance at step 160 in a case where at step 240 said assertion is determined to be proved, and otherwise may not be considered to be secure at step 150. It may be noted that failing to prove the assertion does not necessarily indicate definitively that the code is not secure. The proof for complex code can sometimes be hard, and may not conclude. As such, under these circumstances the code is not demonstrated to be secure", but not necessarily formally proved to be insecure.

Given the code in question, as modified, and the stated objective of that said critical section is not reached for every possible combination of test condition values for said identified binary tests and for every possible combination of binary attack indicator values indicating the occurrence of at least one attack across each respective combination of test condition values, performing the defined deductive validation lies within the capacity of the skilled person.

It will be appreciated that the method of figure 2 is logically equivalent to that of figure 1, and that all of the variants and optional features presented with respect to figure 1 may equally be implemented in variants of figure 2.

The skilled person will appreciate that the various concepts described above may be freely combined. Any or all of the exemplary logical structures of figure 1 may be adopted, or replaced with equivalent structures as will be apparent to the skilled person. Any combination of the preferred embodiments for example using in-lining, rolling out of loops, expanding compound functions, and so on may be implemented together, and may be incorporated individually or in any combination in the other arrangements presented herein.

The proposed method is capable to take into account the characteristics of the underlying architecture. Thanks to the use of automatic verification tools over (slightly adapted) real-life code, this method is able to consider the precise architecture characteristics of the real-life code over the real-life target hardware.

Such characteristics can include for instance (all or any combination of) the following: the size of data of particular types (number of bytes representing data of various types), alignment constraints of various data types (constraints over the addresses where objects of a certain type ought to be stored), endianness (the order in which the bits representing some data elements are physically stored in memory), fixed memory addresses (e.g. in case of access to hardware devices), available memory space, possible specific configurations (e.g. defined as macros) as well as other architecture-related characteristics.

Similarly, the proposed method can precisely handle low-level memory operations (such as bit level operations, bit shifts, etc.). In addition, the proposed method can detect and take into account undefined behavior and implementation-defined behavior (where the behavior of the code can depend on a specific target architecture) possibly occurring in the code.

Software embodiments include but are not limited to application, firmware, resident software, microcode, etc. The invention can take the form of a computer program product accessible from a computer-usable or computer-readable medium providing program code for use by or in connection with a computer or an instruction execution system. Software embodiments include software adapted to implement the steps discussed above with reference to figures 1 or 2. A computer-usable or computer-readable can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium.

In some embodiments, the methods and processes described herein may be implemented in whole or part by a user device 300 such as an embedded system.

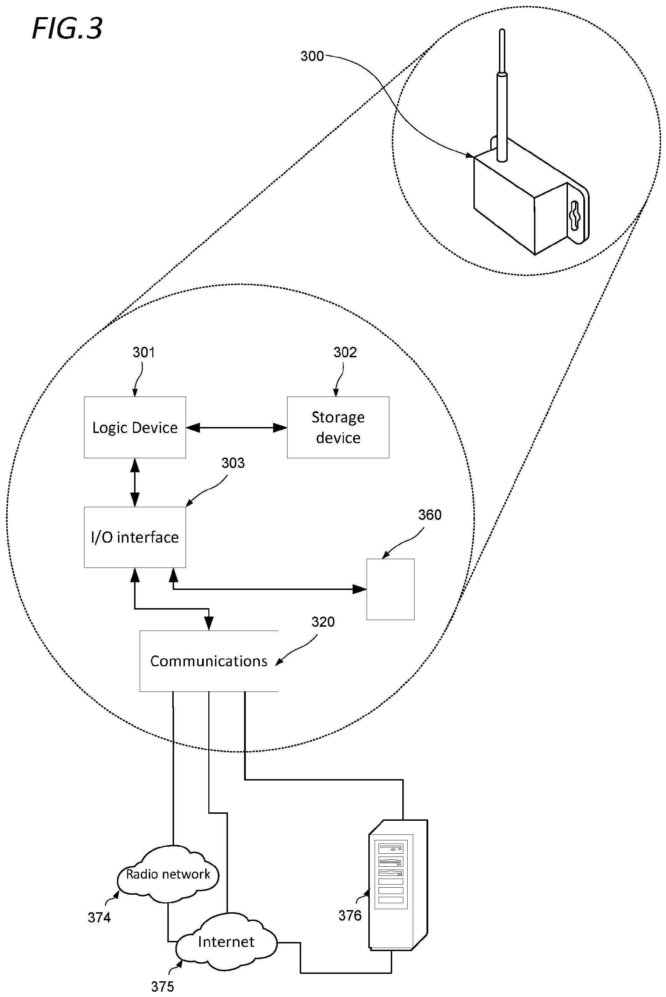

Figure 3 presents a user device in accordance with certain embodiments.

The methods and processes described with reference to figure 1 or 2 may be implemented by computer-application programs or services, an application-programming interface (API), a library, and/or other computer-program product, or any combination of such entities.

As shown in figure 3, a user device may comprise one or more physical logic devices 301 configured to execute instructions that are part of one or more applications, services, programs, routines, libraries, objects, components, data structures, or other logical constructs which are subject to verification by means of the processes described above. Such verification ensures that such applications, services, programs, routines, libraries, objects, components, data structures are resistant to physical attacks up to a specified level, such that the device 300 itself benefits from enhanced protection against physical attacks of processors including embedded systems (via light pulses, laser shots, clock, voltage or electromagnetic glitches, etc.), by ensuring that effective countermeasures are incorporated in code directing the operations of such processors.

Additionally, the device 300 may also incorporate instrumentations for the on-board implementation of such processes. Such instructions may be implemented to perform a task, implement a data type, transform the state of one or more components, achieve a technical effect, or otherwise arrive at a desired result, in particular to implement certain of the operations described above, for example with reference to figure 1 or 2.

Such logic devices 301 may include one or more processors configured to execute software instructions. Additionally or alternatively, the logic device may include one or more hardware or firmware logic devices configured to execute hardware or firmware instructions. Processors of the logic device may be single-core or multi-core, and the instructions executed thereon may be configured for sequential, parallel, and/or distributed processing. Individual components of the logic device optionally may be distributed among two or more separate devices, which may be remotely located and/or configured for coordinated processing. Aspects of the logic device may be virtualized and executed by remotely accessible, networked computing devices configured in a cloud-computing configuration.

The controller may additionally comprise or have access to one or more storage devices 302, which may include one or more physical devices configured to hold instructions executable by the logic device to implement the methods and processes described herein. When such methods and processes are implemented, the state of a storage device may be transformed - e.g., to hold different data.

A storage device may include removable and/or built-in devices. Storage device may be locally or remotely stored (in a cloud for instance). Storage device 302 may comprise one or more types of storage device including semiconductor memory (e.g., FLASH, RAM, EPROM, EEPROM, etc.), and/or magnetic memory (e.g., MRAM, etc.), among others. Storage device may include volatile, non-volatile, dynamic, static, read/write, read-only, random-access, sequential-access, location- addressable, file-addressable, and/or content-addressable devices.

In certain arrangements, the system may comprise an interface adapted to support communications between the logic device and further system components.

It will be appreciated that storage device includes one or more physical devices, and excludes propagating signals per se. However, aspects of the instructions described herein alternatively may be propagated by a communication medium (e.g., an electromagnetic signal, an optical signal, etc.), as opposed to being stored on a storage device.

Aspects of logic device 301 and storage device 302 may be integrated together into one or more hardware-logic components. Such hardware-logic components may include field-programmable gate arrays (FPGAs), program- and application-specific integrated circuits (PASIC/ASICs), program- and application-specific standard products (PSSP/ASSPs), system-on-a-chip (SOC), and complex programmable logic devices (CPLDs), for example.

The term "program" may be used to describe an aspect of computing system implemented to perform a particular function. In some cases, a program may be instantiated via logic device executing machine-readable instructions held by a specific storage device. It will be understood that different modules may be instantiated from the same application, service, code block, object, library, routine, API, function, etc. Likewise, the same program may be instantiated by different applications, services, code blocks, objects, routines, APIs, functions, etc. The term "program" may encompass individual or groups of executable files, data files, libraries, drivers, scripts, database records, etc.

In particular, the system of figure 3 may be used to implement embodiments of the invention. Some or all of the functions of the above embodiments may be implemented by the way of suitable instructions stored in storage device 302 and executed by logic device 301. Instructions implementing this configuration may be stored partially or wholly in the storage device and/or any of the other storage components as described herein.

A controller such as that of figure 3 may be configured or adapted to implement any of the operations described above for example with reference to figure 1 or 2 as required.

As shown, the device 300 may additionally comprise an I/O interface 303, which may in turn be in communication with a communications interface 320 which may provide communications via a wireless network 374, the internet 375, or or direct connection (for instance via USB, for example as in the case of the Wookey example mentioned above) or other communication channels as desired, for example to remote system 376. Additional components 360 may interface with other hardware such as sensors, display elements, user input devices, additional storage, and the like.

It may be noted that while figure 3 has been described in terms of an embedded device incorporating code verified in accordance with the invention, and optionally incorporating instrumentations capable of performing the on-board verification of code, in other scenarios the code may be verified on a separate device such as a conventional computer system, before loading onto the device of figure 3. For example, in the context of figure 3 the code might be verified on remote system 376, and loaded onto device 300 as required via a suitable communication channel. The skilled person with recognise that a conventional computer system may itself comprise equivalent components to those shown in figure 3.

Accordingly, the resistance of secure software code defining a secure critical section to physical attacks is verified to a rated value by performing a deductive verification of a modified version of the code in question where each binary test in the code is replaced with an attack simulation test representing an exclusive or of the variable value tested in ordinary operation and a variable indicating the presence of a physical attack, where the deductive verification attempts to prove an assertion that the critical section is not reached for every possible combination of test condition values for said identified binary tests and for every possible combination of binary attack indicator values indicating the occurrence of at least one attack across each respective combination of test condition values. Called functions and looped structures may be in-lined so as to be assessed in the same verification.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

**Claims**

1. A computer implemented method of determining a resistance of software code to physical attacks based on an inversion of a test condition, said software code having a rated resistance (k) in terms of a maximum number of supported attacks, said software code comprising a critical section to which said rated resistance is specified to prevent improper access, said method comprising the steps of:

Identifying (110) each binary test where satisfaction of a respective test condition is required to reach said critical section in sequential execution of said code(C1...CN). Modifying said software code to replace (120) each said binary test with a respective attack simulation test implementing an exclusive OR operation of a value of said respective test condition and a respective binary attack indicator value defined by a respective non interpreted function to indicate either an occurrence of an attack in the respective attack simulation test, or an absence of an attack in the respective attack simulation test, where a total number of attacks for a given possible combination of test condition values comprising each value applicable at each identified test in said code, is less than or equal to said rated resistance (k),

applying deductive verification (230) of said modified software code to an assertion stating that said critical section is not reached for every possible combination of test condition values for said identified binary tests and for every possible combination of binary attack indicator values indicating the occurrence of at least one attack across each respective combination of test condition values,

and considering said code to be effectively secure (160) to its rated resistance in a case where said assertion is proved.

2. The method of claim 1 comprising a further step, prior to said step of Identifying each binary test, of identifying any functions called by said code, and additionally performing the steps of claim 1 with respect to a software code of each said function.

3. The method of claim 1 comprising a further step, prior to said step of Identifying each binary test, of identifying any functions called by said code, and explicitly incorporating a software code of said function in said code each time said function is called.

4. The method of any preceeding claim comprising a further step, prior to said step of identifying each binary test, of identifying iterative loop structures in said code, and explicitly incorporating a software code of said loop in said code for a predefined number of iterations thereof.

5. The method of any preceding claim comprising the further steps, prior to said step of modifying said software code, of identifying any compound test, where a single test includes a logical combination of values and of replacing each said compound test with a series of binary tests implementing a function of said compound test.

6. A data processing system configured to carry out the method of any of claim 1 to 5.

7. A computer program comprising instructions which, when executed by a computer, cause the computer to carry out the method of any of claims 1 to 5.

8. A computer-readable medium comprising instructions which, when executed by a computer, cause the computer to carry out the method of any of claims 1 to 5.

**Patentansprüche**

1. Computerimplementiertes Verfahren zum Bestimmen der Widerstandsfähigkeit von Softwarecode gegen physikalische Angriffe, beruhend auf einer Inversion einer Testbedingung, wobei der Softwarecode eine bewertete Widerstandsfähigkeit (k) in Bezug auf eine maximale Anzahl unterstützter Angriffe aufweist, wobei der Softwarecode einen kritischen Abschnitt umfasst, für den die bewertete Widerstandsfähigkeit spezifiziert ist, um unberechtigten Zugriff zu verhindern, wobei das Verfahren die folgenden Schritte umfasst:

Identifizieren (110) jedes binären Tests, bei dem eine Erfüllung einer jeweiligen Testbedingung erforderlich ist, um den kritischen Abschnitt bei der sequenziellen Ausführung des Codes ($C_1 \dots C_N$) zu erreichen. Modifizieren des Softwarecodes, um den jeden binären Test durch einen jeweiligen Angriffssimulationstest zu ersetzen (120), der eine exklusive ODER-Operation eines Wertes der jeweiligen Testbedingung und eines jeweiligen binären Angriffsindikatorwerts implementiert, der durch eine jeweilige nicht interpretierte Funktion definiert ist, um entweder ein Auftreten eines Angriffs im jeweiligen Angriffssimulationstest oder ein Fehlen eines Angriffs im jeweiligen Angriffssimulationstest anzuzeigen, wobei eine Gesamtanzahl von Angriffen für eine gegebene mögliche Kombination von Testbedingungswerten, die jeden in jedem identifizierten Test des Codes anwendbaren Wert umfasst, kleiner als oder gleich der bewerteten Widerstandsfähigkeit (k) ist,
Anwenden der deduktiven Verifikation (230) des modifizierten Softwarecodes auf eine Aussage, die besagt, dass der kritische Abschnitt nicht für jede mögliche Kombination von Testbedingungswerten für die identifizierten binären Tests und für jede mögliche Kombination von binären Angriffsindikatorwerten erreicht wird, die das Auftreten von mindestens einem Angriff über jede jeweilige Kombination von Testbedingungswerten anzeigen, und Betrachten des Codes in einem Fall, in dem die Aussage bewiesen wird, als effektiv sicher (160) bis zu seiner bewerteten Widerstandsfähigkeit.

2. Verfahren nach Anspruch 1, umfassend einen weiteren Schritt, vor dem Schritt des Identifizierens jedes binären Tests, des Identifizierens jeglicher von dem Code aufgerufenen Funktionen und zusätzlich Durchführen der Schritte nach Anspruch 1 in Bezug auf einen Softwarecode jeder der Funktionen.

3. Verfahren nach Anspruch 1, umfassend einen weiteren Schritt, vor dem Schritt des Identifizierens jedes binären Tests, des Identifizierens jeglicher von dem Code aufgerufenen Funktionen und des ausdrücklichen Einbindens eines Softwarecode der Funktion in den Code jedes Mal, wenn die Funktion aufgerufen wird.

4.  Verfahren nach einem vorstehenden Anspruch, umfassend einen weiteren Schritt, vor dem Schritt des Identifizierens jedes binären Tests, des Identifizierens iterativer Schleifenstrukturen im Code und des ausdrücklichen Einbindens eines Softwarecodes der Schleife in den Code für eine vordefinierte Anzahl von Iterationen davon.

5.  Verfahren nach einem vorstehenden Anspruch, umfassend die weiteren Schritte, vor dem Schritt des Modifizierens des Softwarecodes, des Identifizierens jeglicher zusammengesetzter Tests, wobei ein einzelner Test eine logische Kombination von Werten einschließt, und des Ersetzens jedes der zusammengesetzten Tests durch eine Reihe von binären Tests, die eine Funktion des zusammengesetzten Tests implementieren.

6.  Datenverarbeitungssystem, das konfiguriert ist, das Verfahren nach einem der Ansprüche 1 bis 5 durchzuführen.

7.  Computerprogramm, das Anweisungen umfasst, die, wenn sie von einem Computer ausgeführt werden, den Computer veranlassen, das Verfahren nach einem der Ansprüche 1 bis 5 auszuführen.

8.  Computerlesbares Speichermedium, das Anweisungen umfasst, die, wenn sie von einem Computer ausgeführt werden, den Computer veranlassen, das Verfahren nach einem der Ansprüche 1 bis 5 auszuführen.

**Revendications**

1.  Procédé informatique de détermination de la résistance d'un code logiciel aux attaques physiques, basé sur l'inversion d'une condition de test, ledit code logiciel présentant une résistance nominale (k) exprimée en nombre maximal d'attaques supportées, ledit code logiciel comprenant une section critique à laquelle ladite résistance nominale est spécifiée afin d'empêcher tout accès non autorisé, ledit procédé comprenant les étapes de :

    identification (110) de chaque test binaire où la satisfaction d'une condition de test respective est requise pour atteindre ladite section critique dans l'exécution séquentielle dudit code ($C_1 ... C_N$). modification dudit code logiciel pour remplacer (120) chacun desdits tests binaires par un test de simulation d'attaque respectif mettant en œuvre une opération OU exclusif d'une valeur de ladite condition de test respectif et d'une valeur d'indicateur d'attaque binaire respectif définie par une fonction non interprétée respective pour indiquer soit la survenue d'une attaque dans le test de simulation d'attaque respectif, soit l'absence d'une attaque dans le test de simulation d'attaque respectif, dans lequel un nombre total d'attaques pour une combinaison possible donnée de valeurs de conditions de test comprenant chaque valeur applicable à chaque test identifié dans ledit code, est inférieur ou égal à ladite résistance nominale (k),
    application de la vérification déductive (230) dudit code logiciel modifié à une assertion indiquant que ladite section critique n'est pas atteinte pour chaque combinaison possible de valeurs de conditions de test pour lesdits tests binaires identifiés et pour chaque combinaison possible de valeurs d'indicateurs d'attaque binaire indiquant la survenue d'au moins une attaque pour chaque combinaison respective de valeurs de conditions de test,
    et considération dudit code comme étant effectivement sécurisé (160) à sa résistance nominale dans le cas où ladite assertion est prouvée.

2.  Procédé selon la revendication 1 comprenant une étape supplémentaire, avant ladite étape d'identification de chaque test binaire, consistant à identifier toutes les fonctions appelées par ledit code, et à effectuer en outre les étapes de la revendication 1 à l'égard d'un code logiciel de chacune desdites fonctions.

3.  Procédé selon la revendication 1 comprenant une étape supplémentaire, avant ladite étape d'identification de chaque test binaire, consistant à identifier toutes les fonctions appelées par ledit code et à incorporer explicitement un code logiciel de ladite fonction dans ledit code chaque fois que ladite fonction est appelée.

4.  Procédé selon une quelconque revendication précédente comprenant une étape supplémentaire, avant ladite étape d'identification de chaque test binaire, d'identification des structures de boucle itératives dans ledit code, et d'incorporation explicite d'un code logiciel de ladite boucle dans ledit code pour un nombre prédéfini d'itérations de celui-ci.

5.  Procédé selon une quelconque revendication précédente comprenant les étapes supplémentaires, avant ladite étape de modification dudit code logiciel, d'identification de tout test composé, dans lequel un seul test inclut une combinaison logique de valeurs, et de remplacement de chaque test composé par une série de tests binaires mettant en œuvre une fonction dudit test composé.

6. Système de traitement de données configuré pour mettre en œuvre le procédé d'une quelconque revendication 1 à 5.

7. Programme informatique comprenant des instructions qui, lorsqu'elles sont exécutées par un ordinateur, amènent l'ordinateur à mettre en œuvre le procédé selon l'une quelconque des revendications 1 à 5.

8. Support lisible par ordinateur, comprenant des instructions, qui, lorsqu'elles sont exécutés par un ordinateur, amènent l'ordinateur à exécuter le procédé solen l'une quelconque des revendications 1 à 5.

# FIG.1

# FIG.2

100 — Start

110 — Identify binary tests

120 — Replace binary tests with attack simulation test

230 — deductive verification of said modified software code

240 — Assertion proved?

150 — Code is Not secure

160 — Code is secure

170 — End

# FIG.3

300

301 Logic Device

302 Storage device

303 I/O interface

360

320 Communications

374 Radio network

375 Internet

376

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. BARENGHI** ; **L. BREVEGLIERI** ; **I. KOREN** ; **D. NACCACHE**. Fault Injection Attacks on Cryptographic Devices: Theory, Practice, and Countermeasures. *Proc. IEEE*, 2012, vol. 100 (11), 3056-3076
- **S. BHASIN** ; **P. MAISTRI** ; **F. REGAZZONI**. Malicious wave: Asurvey on actively tampering using electromagnetic glitch. *2014 International Symposium on Electromagnetic Compatibility, Tokyo*, 2014, 318-321
- **B. YUCE** ; **P. SCHAUMONT** ; **M. WITTEMAN**. Fault Attacks on Secure Embedded Software: Threats, Design, and Evaluation. *J. Hardw. Syst. Secur.*, May 2018, vol. 2 (2), 111-130
- On Evaluating Fault Resilient Encoding Schemes in Software. **JAKUB BREIER et al.** IEEE transactions on Dependable and Secure Computing. IEEE service center, 05 February 2019
- Using linear codes as a fault countermeasure for nonlinear operations: application to AES and formal verification. **ABINE AZZI et al.** Journal of Cryptographic Engineering. Springer, 28 October 2016
- **LIONEL RIVIÈRE**. *Sécurisation des implémentations logicielles face aux attaques par injection de faute sur systèmes embarqués*, 23 September 2015
- **BARENGHI, ALESSANDRO** ; **BREVEGLI, LUCA** ; **KOREN, ISRAEL** ; **PELOSI, GERARDO** ; **REGAZZONI, FRANCESCO**. Countermeasures against fault attacks on software implemented AES: effectiveness and cost. *Workshop on Embedded Systems Security (WESS)*, October 2010

- **M. POTET** ; **L. MOUNIER** ; **M. PUYS** ; **L. DUREUIL**. Lazart: A Symbolic Approach for Evaluation the Robustness of Secured Codes against Control Flow Injections. *IEEE International Conference on Software Testing, Verification and Validation (ICST)*, 2014, 213-222
- **M. CHRISTOFI** ; **B. CHETALI** ; **L. GOUBIN** ; **D. VIGILANT**. Formal verification of a CRT-RSA implementation against fault attacks. *J. Cryptogr. Eng.*, September 2013, vol. 3 (3), 157-167
- **K. HEYDEMANN** ; **J.-F. LALANDE** ; **P. BERTHOMÉ**. Formally verified software countermeasures for control-flow integrity of smart card C code. *Comput. Secur.*, August 2019, vol. 85, 202-224
- **ANSSI et al.** Inter- CESTI: Methodological and Technical Feedbacks on Hardware Devices Evaluations. *Symposium sur la sécurité des technologies de l'information et des communications (SSTIC)*, 2020, https://www.sstic.org/2020/presentation/inter-cesti_methodological_and_technical_feedbacks_on_-hardware_devices_evaluations
- **S. BARDIN** ; **O. CHEBARO** ; **M. DELAHAYE** ; **N. KOSMATOV**. An All-in-One Toolkit for Automated White-Box Testing. *TAP, York, UK*, 2014, 53-60
- **F. KIRCHNER** ; **N. KOSMATOV** ; **V. PREVOSTO** ; **J. SIGNOLES** ; **B. YAKOBOWSKI**. Frama-C: A software analysis perspective. *Form. Asp Comput*, 2015, vol. 27 (3), 573-609